# EUROPÄISCHE PATENTANMELDUNG

(11) **EP 3 808 687 A1**
(43) Veröffentlichungstag der Anmeldung: **21.04.2021**
(21) Anmeldenummer: 19203228.2
(22) Anmeldetag: 15.10.2019
(51) Int. Cl.: B65G 43/02

(54) **VERFAHREN ZUR ZUSTANDSÜBERWACHUNG EINES FÖRDERSYSTEMS UND FÖRDERSYSTEM MIT ZUSTANDSÜBERWACHUNG**

(71) Anmelder: Siemens Aktiengesellschaft, 80333 München (DE)
(72) Erfinder: König, Frank, 44879 Bochum (DE)
(74) Vertreter: Maier, Daniel Oliver

(57) **Zusammenfassung**

Zur Zustandsüberwachung beim Betreiben eines Fördersystems (2) nimmt eine Mess-Transportvorrichtung (8m), die entlang einer Förderstrecke (4) transportiert wird, Abbilder (12) des Fördersystems (2) auf, die mit einem Zeitstempel (t) und Ortsstempel (16) versehen und an ein Hintergrundsystem (6) übermittelt werden. Im Hintergrundsystem (6) werden die Abbilder (12) einer Analyse unterzogen, wobei Abbilder (12) mit gleichem Ortsstempel (16) miteinander verglichen werden und Abweichungen zwischen den Abbildern (12) mit gleichem Ortsstempel (16) als Zustandsveränderung des Fördersystems (2) erkannt und mit einer Meldung signalisiert werden.

## Beschreibung

Die vorliegende Erfindung bezieht sich auf ein Verfahren zur Zustandsüberwachung beim Betreiben eines Fördersystems sowie auf ein Fördersystem mit Verschleißerkennung gemäß den unabhängigen Patentansprüchen.

Die vorliegende Erfindung betrifft insbesondere das technische Gebiet von Fördersystemen innerhalb eines Flughafens für Gepäckstücke und Stückgüter. Ein Ziel eines jeden Flughafenbetreibers ist es, Ausfälle bei der Gepäckabfertigung auf ein Minimum zu reduzieren. In der Praxis bedeutet dies, dass die Gepäckfördersysteme während des Betriebs "am Leben" gehalten werden und eine zeitbasierte Wartung ausserhalb der Betriebszeiten durchgeführt wird.

Der Ausfall von nur einer Komponente kann zum Ausfall oder zur Verlangsamung wichtiger Bestandteile des Gepäckfördersystems führen. Dies kann für den betreffenden Flughafen und seine Passagiere sehr schnell zu Chaos führen, wobei Gepäckstücke ihre Flüge verpassen, und schlimmstenfalls Flugverspätungen und -ausfälle auftreten. Im Rahmen von leistungsbasierten Serviceverträgen mit strengen KPIs in Bezug auf Systemverfügbarkeit und -zuverlässigkeit können dem Gepäckfördersystem-Betreiber hierdurch hohe finanzielle Sanktionen verhängt werden.

Flughafen-Gepäckfördersysteme müssen schnell und hochgradig zuverlässig dazu in der Lage sein, mehrere Tausend Gepäckstücke pro Stunde zu sortieren und zu transportieren. Es existieren Systeme zur Überwachung und Steuerung technischer Prozesse mittels eines Computer-Systems, die bei der Überwachung von Flughafen-Gepäckfördersystemen zur Anwendung kommen. Diese Systeme können Ausfälle von Abschnitten eines Fördersystems anzeigen, beispielsweise wenn diese Abschnitte nicht mehr für die Gepäckabfertigung verfügbar sind. Unerwartete Systemausfälle sollten aber vermieden werden.

Die Bewirtschaftung von DCV-Systemen (Direction Coded Vehicles) ist besonders herausfordernd, da diese sehr lang sind (ca. 200 km in einem großen Flughafen) und tausende individuelle Komponenten umfassen. Potentielle Systemprobleme können anhand des visuellen Zustands der Komponenten, Fehlausrichtungen oder Ablagerungen oder unerwarteter Objekte wie verlorene Gepäckstücken oder bei Wartung zurückgelassene Werkzeuge identifiziert werden. Das Durchführen von Systembegehungen für die physische Inspektion und Überprüfung von Komponenten ist aufgrund der Systemlänge in einem DCV-System äußerst ressourcenintensiv und die Effektivität hängt in hohem Maße von den Fähigkeiten, der Ausbildung, der Sorgfalt und dem persönlichen Urteilsvermögen einzelner Mitarbeiter ab. Zudem ist die Systemumgebung für solche Vermessungen, insbesondere in DCV-Tunneln, oft schwierig und gefährlich, was die Häufigkeit verringert, mit der Systembegehungen durchgeführt werden. Zwangsläufig werden die Systembegehungen somit nicht oft genug durchgeführt, um bestehende Probleme zu erkennen. Zudem übersieht auch ein gut geschulter menschlicher Mitarbeiter Dinge (beispielsweise eine sich langsam lösende Schraube) oder interpretiert sie falsch, so dass Systembegehungen nicht ausreichen, um Systemausfälle zu verhindern.

Der vorliegenden Erfindung liegt daher die Aufgabe zugrunde, eine schnelle, zuverlässige und regelmäßige Zustandsüberwachung in Fördersystemen, insbesondere Gepäckfördersystemen, noch insbesonderer in DCV-Systemen, zu ermöglichen. So können auftretende Wartungsprobleme frühzeitig erkannt und die operativen Ressourcen auf die Behebung und Wartung von Problemen und Ausfällen anstatt auf Brandbekämpfung von Ausfällen gelenkt werden. Diese Aufgabe wird durch die in den unabhängigen Ansprüchen beschriebenen Lösungen gelöst. Eine Verfügbarkeit dieser Lösung als Retrofit vereinfacht, insbesondere aufgrund der Systemlänge, die Installation und Wartung im Vergleich zu stationären Installationen.

Diese Aufgabe wird durch die in den unabhängigen Ansprüchen angegebenen Merkmale gelöst.

Die erfindungsgemäße Lösung sieht ein Verfahren zur Zustandsüberwachung beim Betreiben eines Fördersystems vor, das mindestens eine Förderstrecke umfasst, wobei entlang der Förderstrecke Transportvorrichtungen transportierbar sind. Durchgeführt werden die Verfahrensschritte:
a) Aufnahme von Abbildern des Fördersystems, insbesondere der Förderstrecke, aufgenommen von einer sich entlang der Förderstrecke bewegenden Mess-Transportvorrichtung und Generieren eines Zeitstempels und eines Ortsstempels für jedes Abbild.
b) Das aufgenommene Abbild wird zusammen mit einem Zeitstempel und einem Ortsstempel an ein Hintergrundsystem übermittelt.
c) Im Hintergrundsystem werden die Abbilder einer Analyse unterzogen, wobei Abbilder mit gleichem Ortsstempel miteinander verglichen werden und Abweichungen zwischen den Abbildern mit gleichem Ortsstempel als Zustandsveränderung des Fördersystems erkannt und mit einer Meldung signalisiert werden.

Das Verfahren eignet sich für sämtliche Fördersysteme, eignet sich aber insbesondere sehr gut für Flughafen-Gepäckfördersysteme, bei denen aufgrund ihrer Länge stationäre Installationen einen großen Installations- und Kostenaufwand bedeuten. Ein bestehendes Fördersystem muss einfach zusätzlich mit einer Mess-Transportvorrichtung ausgestattet werden und über ein zum Analysieren der Abbilder adaptiertes Hintergrundsystem verfügen, wobei entweder ein bereits vorhandenes Hintergrundsystem des Fördersystems hierzu angepasst oder ein hierfür eigens vorgesehenes Hintergrundsystem herangezogen werden kann.

Unter einer Transportvorrichtung soll jegliche aktive oder passive Fördereinheit verstanden werden. Hierunter fallen sowohl Transportmittel zum aktiven Transport (z.B. ein fahrerloses Transportfahrzeug), die ihre Förderstrecke selbsttätig, aus eigener Kraft, befahren, als auch Transporthilfsmittel zum passiven Transport (z.B. Transportwannen) die auf einer Förderstrecke aufliegend von dieser, typischerweise über Bänder und/oder Rollen, angetrieben werden.

Das Hintergrundsystem kann auf der Mess-Transportvorrichtung oder stationär angeordnet sein, bei einer stationären Anordnung bietet sich eine drahtlose Informationsübertragung an. Eine Anordnung auf dem Messvehikel hat den Vorteil, dass geringere Datenmengen (nur diejenigen Abbilder, anhand derer eine Zustandsveränderung festgestellt wird und die zu einer Meldung führen) übertragen werden müssen.

Die Mess-Transportvorrichtung kann als gewöhnliche Transportvorrichtung plus Abbilderstellvorrichtung oder als spezielle Mess-Transportvorrichtung mit weiterer Funktionalität (z.B. Hintergrundsystem o.ä.) ausgestaltet sein. Die Aufnahme des Abbilds erfolgt aus der Perspektive der Mess-Transportvorrichtung, so dass die Positionierung der Abbilderstellvorrichtung entscheidend ist. Ein Ortsstempel umfasst die Positionierung und somit die Perspektive der Abbilderstellvorrichtung, so dass Abbilder mit gleichem Ortsstempel unabhängig vom Aufnahmezeitpunkt immer den gleichen Blickwinkel aus der gleichen Position liefern.

Gemäß einer Ausführungsform wird der Ortsstempel erhalten von einer evtl. bereits vorhandenen Ortsinformation der Transportvorrichtung. Bei einem Direction Coded Vehicle wird die Ortsinformation typischerweise routinemäßig an ein übergeordnetes Hintergrundsystem übermittelt.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um wahlweise eine vollständige visuelle Abdeckung des Fördersystems, die mit einem höheren Analyseaufwand einhergeht, und/oder eine nur strategische visuelle Abdeckung, beispielsweise von besonders fehler- bzw. wartungsanfälligen Abschnitten, zu erzielen, können die Abbilder aufgenommenen werden an definierten Positionen des Fördersystems, beispielsweise vorgeben durch ein Raster und/oder Orientierungspunkte der Förderstrecke, so dass im zeitlichen Verlauf zwei oder mehr Abbilder mit identischem Ortsstempel entstehen. Diese Wahl kann kombiniert werden, um einen guten Kompromiss zwischen Analyseaufwand und genügend häufiger Zustandsüberwachung zu erreichen.

Positionierung, Genauigkeit und Blickwinkel der Kamera sind auf das entsprechende Fördersystem abgestimmt. Auf diese Weise kann das Fördersystem abgedeckt werden, ohne dass zu große Überschneidungen des abgedeckten Fördersystems auf den Abbildern notwendig sind.

Gemäß einer Ausführungsform kann das Abbild Wärmestrahlung und/oder optische Strahlung abbilden.

Gemäß einer weiteren Ausführungsform können im Verfahrensschritt c) die Abbilder mit gleichem Ortsstempel analysiert werden hinsichtlich Abweichungen physikalischer Lage abgebildeter Teile und/oder Temperatur und/oder fehlender Teile.

Gemäß einer Ausführungsform kann die Mess-Transportvorrichtung mindestens eine Kamera zur Aufnahme der Abbilder erfassen, wobei die Kamera auf einer Transportvorrichtung angeordnet und befestigt ist und auf dieser entlang der Förderstrecke transportiert wird. Die Kamera agiert als Abbilderstellvorrichtung.

Um einem menschlichen Operator eine Rückmeldung über die Art der erkannten Zustandsveränderung zu geben, der dann über das weitere Vorgehen, beispielsweise betreffend den Wartungsbedarf, dieser erkannten Zustandsveränderung entscheiden zu können, können die im Verfahrensschritt c) als Zustandsveränderung des Fördersystems erkannten Abbilder gemeinsam mit den erkannten Zustandsveränderung einem menschlichen Operator zur weiteren Entscheidung zugänglich gemacht werden.

Gemäß einer Ausführungsform kann die Transportvorrichtung ausgestaltet sein als Destination Coded Vehicle (DCV) oder als fahrerloses Transportfahrzeug (FTF - Automated Guided Vehicle, AGV).

Hinsichtlich einer Vorrichtung wird die vorstehend genannte Aufgabe gelöst durch ein Fördersystem umfassend mindestens eine Förderstrecke zum Transport von Transportvorrichtungen, eine Mess-Transportvorrichtung und ein Hintergrundsystem. Entlang der Förderstrecke sind Transportvorrichtungen transportierbar.
a) Die Mess-Transportvorrichtung ist ausgestaltet zur Aufnahme von Abbildern des Fördersystems, insbesondere der Förderstrecke, und zum Generieren eines Zeitstempels und eines Ortsstempels für jedes Abbild während einer Bewegung der Mess-Transportvorrichtung entlang der Förderstrecke.
b) Die Mess-Transportvorrichtung ist ausgestaltet zur Übermittlung der aufgenommenen Abbilder zusammen mit dem jeweiligen Zeitstempel und dem jeweiligen Ortsstempel an das Hintergrundsystem.
c) das Hintergrundsystem (6) ausgestaltet ist zum Analysieren der Abbilder (12) indem die Abbilder (12) mit gleichem Ortsstempel (16) miteinander verglichen werden und Abweichungen zwischen den Abbildern (12) mit gleichem Ortsstempel (16) als Zustandsveränderung des Fördersystems (2) erkannt und mit einer Meldung signalisiert werden.

Gemäß einer Ausführungsform können die Abbilder aufgenommenen werden an definierten Positionen des Fördersystems, beispielsweise vorgeben durch ein Raster und/oder Orientierungspunkte der Förderstrecke, so dass im zeitlichen Verlauf zwei oder mehr Abbilder mit identischem Ortsstempel vorliegen.

Gemäß einer Ausführungsform kann die Mess-Transportvorrichtung ausgestaltet sein zur Aufnahme von Abbildern die Wärmestrahlung und/oder optische Strahlung abbilden.

Gemäß einer weiteren Ausführungsform kann das Hintergrundsystem ausgestaltet sein, die Abbilder mit gleichem Ortsstempel zu analysieren hinsichtlich Abweichungen physikalischer Lage abgebildeter Teile und/oder Temperatur und/oder fehlender Teile.

Gemäß noch einer weiteren Ausführungsform kann die Mess-Transportvorrichtung mindestens eine Kamera zur Aufnahme der Abbilder umfassen, wobei die Kamera auf einer Transportvorrichtung angeordnet und befestigt ist und auf dieser entlang der Förderstrecke transportierbar ist. Höhe und Linse der Kamera ist auf das Fördersystem abgestimmt und die Kamera kann in alle Richtungen ausgerichtet werden.

Um eine erkannte Zustandsveränderung individuell zu beurteilen, können die als Zustandsveränderung des Fördersystems erkannten Abbilder gemeinsam mit der erkannten Zustandsveränderung einem menschlichen Operator zur weiteren Entscheidung zugänglich gemacht werden.

Gemäß einer Ausführungsform kann das Fördersystem ein individuelles Fördersystem (Individual Carrier System ICS), beispielsweise ein Flughafen-Gepäckfördersystem, sein. Das Fördersystem ist so adaptiert für Transportvorrichtungen wie Destination Coded Vehicles (DCV) oder fahrerlose Transportfahrzeuge (FTF - Automated Guided Vehicle, AGV).

Gemäß einer weiteren Ausführungsform kann das Hintergrundsystem auf der Mess-Transportvorrichtung angeordnet sein und entlang der Förderstrecke transportierbar sein.

Ausführungsformen der Erfindung werden nachfolgend anhand der Figuren beispielsweise näher erläutert. Dabei zeigen:
- Figur 1: ein erfindungsgemäßes Fördersystem;
- Figur 2a: eine stationäre Zustandsüberwachung;
- Figur 2b: eine mitbewegende Zustandsüberwachung.

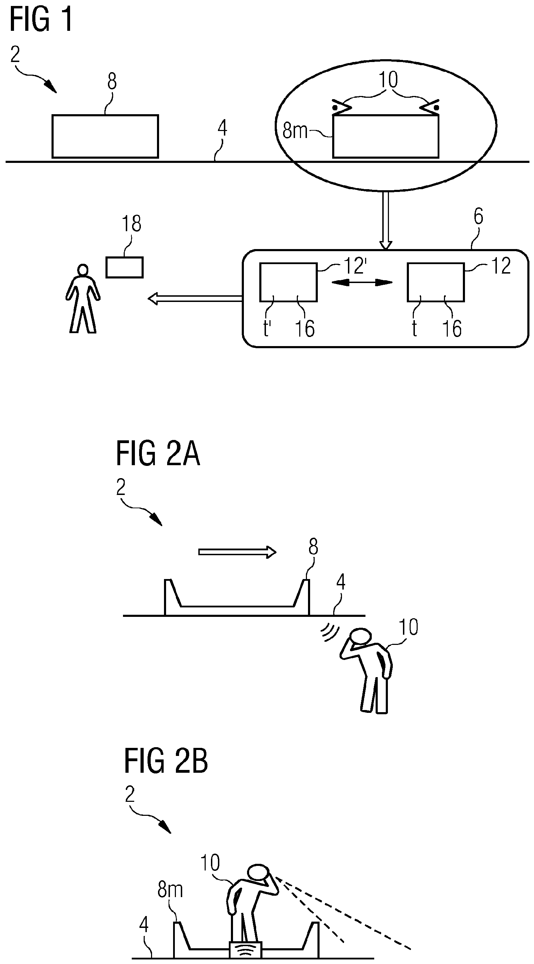

Figur 1 zeigt ein Flughafen-Gepäckfördersystem 2 gemäß einer Ausführungsform der Erfindung. Entlang einer Förderstrecke 4 werden Gepäckstücke auf als Behältern 8 oder andersartig ausgestalteten Transportvorrichtungen 8 bewegt. Eine als Mess-Transportvorrichtung 8m ausgestaltete Transportvorrichtung 8 umfasst Detektoren 10 zur Aufnahme von Abbildern 12 des Flughafen-Gepäckfördersystems 2, wobei die Positionierung der Mess-Transportvorrichtung 8m auf der Förderstrecke 4 und die Positionierung des Detektors 10 auf der Mess-Transportvorrichtung 8m, Sichtfeld und Auflösung des Detektors 10 einen jedem Abbild 12 zugeordnetem Ortsstempel 16 festlegen.

Gemäß einer weiteren Ausführungsform ist auf der Mess-Transportvorrichtung 8m noch mindestens eine weitere Detektionsvorrichtungen angeordnet und vom Fördersystem umfasst. Die weitere Detektionsvorrichtung detektiert beispielsweise Schwingungen und/oder Vibrationen und/oder Temperatur und/oder Rauch (nicht abschließende Aufzählung) und übersendet die gemessenen Werten an das Hintergrundsystem 6, welches die Messwerte analysiert und Änderungen und/oder Auffälligkeiten mit einer Meldung signalisiert. Das Hintergrundsystem 6 kann weitere Messwerte auch von stationären Detektionsvorrichtungen oder anderweitig erhalten.

Die Transportvorrichtungen 8 sind aktive Fördereinheiten 8 (und somit Transportmittel 8 für einen aktiven Transport, z.B. AGV) oder passive Fördereinheiten 8 (und somit Transporthilfsmittel/Förderhilfsmittel 8 für einen passiven Transport, z.B. Transportwannen ohne eigenen Antrieb). Aktive Fördereinheiten 8 besitzen einen Motor oder einen anderen Antrieb und befahren ihre Förderstrecke 4 selbsttätig, wodurch die Förderstrecke 4 an sich recht günstig und unkompliziert realisierbar wird und einfach wartbar ist. Passive Fördereinheiten 8 werden von der Förderstrecke 4 selber, typischerweise über Bänder und/oder Rollen, angetrieben, benötigen dadurch eine komplexere Streckenführung, haben allerdings wesentlich günstigere Behälter (meist einfache Plastikwannen). Die Transportvorrichtungen 8 umfassen ein aktives oder passives Lastaufnahmemittel. Gemäß einer Ausführungsform ist das Fördersystem 2 adaptiert für Transportvorrichtungen 8 wie Destination Coded Vehicles (DCV) oder fahrerlose Transportfahrzeuge (FTF - automated guided vehicles, AGV). Das Fördersystem 2 ist gemäß einer Ausführungsform als individuelles Fördersystem ausgestaltet.

Die Förderstrecke 4 kann komplett oder zumindest teilweise überlappend die gleiche sein für alle Transportvorrichtungen 8, 8m des Systems (beispielsweise bei einem Förderband und passiven Transportvorrichtungen 8) oder unterschiedliche Transportvorrichtungen 8, 8m weisen individuelle, nur sehr wenig oder gar nicht überlappende Förderstrecken 4 auf der Förderebene des Fördersystems 2 auf (beispielsweise bei aktiven Transportvorrichtungen 8).

Abbilder 12 mit gleichem Ortsstempel 16 sind also stets aus der gleichen Perspektive mit identischem Blickwinkel aufgenommen. Jedem aufgenommenen Abbild 12 wird zudem ein Zeitstempel t zugeordnet. So können Abbilder 12, 12' mit identischem Ortsstempel 16 und voneinander abweichendem Zeitstempel t, t' zur Analyse von Zustandsänderungen des Flughafen-Gepäckfördersystem 2 herangezogen werden. Der Ortsstempel 16 kann von einer in einem Flughafen-Gepäckfördersystem 2 typischerweise bereits erfassten Ortsinformation der Transportvorrichtung 8 erhalten werden (bei Direction Coded Vehicles wird die Ortsinformation ohnehin meist regelmäßig an ein Hintergrundsystem 6 übermittelt).

Die Mess-Transportvorrichtung 8m ist als gewöhnliche Transportvorrichtung 8 plus Abbilderstellvorrichtung (Kamera) 10 oder als spezielle Mess-Transportvorrichtung 8m mit weiterer Funktionalität ausgestaltet.

Eine Analyse der Abbilder 12, 12' mit identischem Ortsstempel 16 wird von einem Hintergrundsystem 6 durchgeführt. Das Hintergrundsystem 6 ist entweder zumindest teilweise auf der Mess-Transportvorrichtung 8m angeordnet, so dass nur das Ergebnis der Analyse übermittelt werden muss, oder die Abbilder 12, 12' werden an ein stationäres Hintergrundsystem 6 übermittelt und dort analysiert. Bei einem stationären Hintergrundsystem 6 werden Daten vorzugsweise drahtlos übertragen. Zusammen mit den Abbildern 12, 12' werden ihre Zeitstempel t, t' und ihre Ortsstempel 16, 16' übertragen.

Die Analyse ermittelt eine Zustandsveränderung der Abbilder 12, 12', wobei als Zustandsveränderung Veränderungen des Fördersystems 2 selber (locker werdende Schraube, veränderte Temperatur von Gebieten/Teilen des Fördersystems 2 und hierdurch und/oder anderweitig erkennbare Abnutzungserscheinungen, ...) und/oder auch herrenlose bzw. vergessene Gegenstände (von der Förderstrecke 4 gefallene Gepäckstücke und/oder Transportvorrichtungen 8, 8m, kaputte und heruntergefallene Teile des Fördersystems 2, vergessene Wartungsgegenstände wie Schraubenzieher o.ä., ...). Wenn das Hintergrundsystem eine Zustandsveränderung zwischen Abbildern 12, 12' mit gleichem Ortsstempel 16 und voneinander abweichenden Zeitstempeln t, t' feststellt, wird dies mit einer Meldung signalisiert und an einen Computer 18, der von dem Hintergrundsystem 6 umfasst sein kann, übermittelt, damit eine menschliche Einschätzung dieser Zustandsveränderung stattfinden kann und die Dringlichkeit der Wartung ebendieser Zustandsveränderung bestimmt werden kann. Diese Einschätzung kann bei entsprechender Konfiguration des Hintergrundsystems 6 auch maschinell durchgeführt werden.

Figur 2a zeigt eine eine stationäre Zustandsüberwachung bei der ein Beobachter 10 bzw. Detektor 10 (menschlich und/oder maschinell) aus einer sich nicht mit der Transportvorrichtung 8 mitbewegenden Perspektive die Förderstrecke 4 und das Fördersystem 2 überwacht. Die Transportvorrichtung 8 bewegt sich am Detektor 10 vorbei, so dass insbesondere der Zustand der Transportvorrichtung 8 und des kleinen Teils der Förderstrecke 4, welche sich im Blickfeld des Detektors 10 befindet, überwacht wird. Um die gesamte Förderstrecke 4 abzubilden muss der Detektor 10 sich entlang der Förderstrecke 4 bewegen. Bei einem DCV-System wird die Behälterflotte stationär überwacht, wobei der Beobachter 10 die vorbeifahrenden Behälter 8 überprüft.

Die Positionen, an welchen Abbilder 12 aufgenommen werden, werden angepasst an das jeweilige Fördersystem 2 bestimmt. Die Positionen können in regelmäßigen Abständen gemäß einem Raster festgelegt werden - wobei bei einem erneuten Durchgang der Mess-Transportvorrichtung 8m an derselben Stelle und bei gleicher Perspektive (entspricht dem gleichen Ortsstempel 16) ein weiteres Abbild 12 aufgenommen wird. Der Abstand der Rasterpunkte wird angepasst an die Abbildungsgenauigkeit der Abbilder 12 und ihr Blickfeld bestimmt. Je mehr Abbilder 12 entlang der Förderstrecke 4 aufgenommen werden, umso höher ist der Analyseaufwand. Ein guter Kompromiss kann es sein, in regelmäßigen zeitlichen Abständen, aber dennoch nicht bei jedem Durchgang der Mess-Transportvorrichtung 8m, das gesamte Fördersystem 2 (bzw. der von der Mess-Transportvorrichtung 8m her erfassbare Teil) vollständig visuell abzubilden und von besonders fehler- bzw. wartungsanfälligen Abschnitten oder von strategisch wichtigen Abschnitten (z.B. Weichen) bei jedem Durchgang der Mess-Transportvorrichtung 8m Abbilder 12 aufzunehmen und zu analysieren.

Figur 2b zeigt eine erfindungsgemäße sich mitbewegende Zustandsüberwachung, bei welcher sich der Detektor 10 gemeinsam mit der Mess-Transportvorrichtung 8m bewegt. Die Mess-Transportvorrichtung 8m unterscheidet sich von der normalen Transportvorrichtung 8 mindestens dadurch, dass die Mess-Transportvorrichtung 8m einen Detektor (Abbildungserstellvorrichtung) 10 aufweist. Der Detektor 10 bewegt sich gemeinsam mit der Mess-Transportvorrichtung 8m entlang der Förderstrecke 4 und die seitlich und vor bzw. hinter der Förderstrecke 4 liegenden Abschnitte können visuell überwacht werden. Die Mess-Transportvorrichtung 8m kann auch zusätzlich zu einem optischen Detektor 10 einen Vibrationssensor o.ä. als weiteren Detektor umfassen. Auch die von diesem weiteren Detektor aufgenommenen Daten werden vom Hintergrundsystem 6 analysiert. Der Zustand des Fördersystems 2 selbst wird durch einen Beobachter 10 festgestellt, der mit der Mess-Transportvorrichtung 8m entlang der Förderstrecke 4 fährt. Es können die Komponenten des Fördersystems 2 überprüft werden, die während des Durchfahrens im Blickwinkel des Beobachters 10 liegen. Durch Auswahl der Positionierung des Beobachters 10 und seines Blickwinkels wird der zur Feststellung von Zustandsveränderungen analysierbare Bereich des Fördersystems 2 festgelegt. Gesehen, betrachtet und analysiert werden können beispielsweise Bilder 12, Temperaturen, Vibrationen oder Entfernungen.

Erfindungsgemäß werden regelmäßige Zustandsmessungen vorgenommen anhand von den Abbildern 12, die von der Mess-Transportvorrichtung 8m aus aufgenommenen worden sind, so dass die Systemkomponenten, insbesondere kritische Komponenten des Fördersystems 2, überwacht werden. Die Abbilder 12, welche Wärmebilder, RGB-Bilder (visuelle Bilder), Vibrations- und Schallmessungen umfassen können, werden erfasst, auf einem Auswertungsserver 6 gesammelt und analysiert. Der Auswertungsserver 6 kann zusätzlich weitere sensorische Daten des Fördersystems 2 von anderen, stationären und/oder mobilen Detektoren 10' erhalten. Die Analyse wird an den Systembetreiber/Operator übermittelt.

Die Erhebungen, also die Aufnahme von Abbildern 12, 12' und deren Analyse erfolgt regelmäßig (täglich, wöchentlich oder bei jeder oder jeder x-ten Durchfahrt der Mess-Transportvorrichtung 8m). Da der Detektor 10 auf seiner Mess-Transportvorrichtung 8m mit den normalen Transportvorrichtungen 8 mitgeführt wird, können Erhebungen durchgeführt werden, ohne dass Änderungen am Betriebsplan des Flughafen-Gepäckfördersystems 2 notwendig sind.

Typischerweise von einem Abbild 12 erfassbar und für die Zuverlässigkeit des Flughafen-Gepäckfördersystems 2 sinnvollerweise analysierbare Komponenten werden im Folgenden aufgelistet. Motorantrieb, Riemenscheibe und Lagertemperatur können unter Verwendung von Wärmebildern 12, 12' auf Zustandsveränderungen untersucht werden. Fehlerhafte Montage kann durch visuelle Bildanalyse erkannt werden. Sich lösende Schraubenköpfe können durch Nachverfolgung einer Drehbewegung ebendieser Schraubenköpfe in nachfolgenden Abbildern 12, 12' (gleicher Ortsstempel 16, voneinander abweichende Zeitstempel t, t') erkannt werden. Veränderungen im Vibrationsmuster zwischen Förderstreckenübergängen und -verbindungen sind messbar. Fremdkörper können anhand der Abbilder 12 erkannt werden, da sie durch abgenutzte Riemen oder andere Abnutzungserscheinungen von Verschleißteilen auf einem Abbild 12 angedeutet werden. Der Zustand von Förderbändern der Förderstrecke 4 ist auf einem Abbild 12 mit entsprechendem Blickwinkel sichtbar und kann analysiert werden. Ebenso sind fehlende, falsch ausgerichtete oder zerbrochene Komponenten wie Halterungen, Führungsschienen o.ä. sicht- und analysierbar. Bei einem hinreichend gut zur Analyse eines spezifischen Fördersystems 2 trainiertem Hintergrundsystem 6 kann ein Vorhandensein eines unerwarteten Objekts bereits anhand eines einzelnen Abbilds 12 erkannt werden.

Es werden zuverlässig Abbilder 12 (Wärmebilder und sichtbare Bilder) für jedes entscheidende Systemkomponente erfasst. Die Analyse durch das Hintergrundsystem kann eine Nachbearbeitung durch Bildverarbeitung von einzelnen Abbildern 12 oder von mindestens zwei zu unterschiedlichen Zeiten t, t' aber mit gleichem Ortsstempel 16 aufgenommen Abbildern 12, 12' umfassen. So können können Änderungen im Laufe der Zeit quantifiziert und erkannt werden.

Die erfindungsgemäße Lösung erkennt Änderungen im Zustand einzelner Komponenten, indem aktuelle Abbilder 12 mit zu einem früheren Zeitpunkt t' erfassten, historischen Abbildern 12' verglichen werden. Wenn Zustandsänderungen festgestellt werden, wird dies mit einer Meldung signalisiert und die festgestellte Zustandsänderung wird hinsichtlich ihrer Dringlichkeit zur weiteren, genaueren Analyse eingeordnet. Bei dieser Einordnung in eine Warteschlange gemäß Dringlichkeit kann das System 2 Änderungen aufgrund von Umgebungsbedingungen, wie z. B. Änderungen der Umgebungstemperatur, berücksichtigen. Eine Meldung kann auch ausgelöst werden, wenn eine Komponente erheblich von anderen Komponenten desselben Typs innerhalb des Systems 2 abweicht.

Dem menschlichen oder maschinellen Operator wird eine Übersicht der aktuellen und historischen Abbilder 12, 12' und allenfalls weiterer relevanter, aktueller und historischer Systemdaten (Umgebungstemperatur, etc.) zur Verfügung gestellt, mit der die historischen Abbilder 12', u.U. einschließlich aktueller Vermessungsdaten durchsucht und überprüft werden können. So kann der Operator beurteilen, ob ein physisches Inspektions- oder Wartungsereignis über eine neue Arbeitsauftragsliste ausgelöst werden soll. In einer nachfolgenden Schicht können auch andere Operatoren die Komponenten, anhand derer eine Meldung ausgelöst worden ist und allfällige Eingaben des früheren Operators in diese Arbeitsauftragsliste weiter genau beobachten und gegebenenfalls die Reihenfolge ebendieser Arbeitsauftragsliste anpassen.

Gemäß einer Ausführungsform werden anhand einer Meldung des Hintergrundsystems 6 von einem Operator getroffene Entscheidungen und Maßnahmen vollständig überprüft und abgespeichert. Ein offener Arbeitsauftrag der Arbeitsauftragsliste wird so lange beibehalten, bis die Wartung dieses Arbeitsauftrags abgeschlossen ist und zukünftige Zustandsüberwachungen einen Nachweis erbracht haben, dass die fragliche Komponente wieder in einen Normalzustand zurückversetzt worden ist, die nicht zu einer Erkennung als Zustandsveränderung durch das Hintergrundsystem 6 führt. Dem Operator kann erlaubt werden, historische Analysen erneut zu überprüfen. Diese können mit den seit Abschluss der Wartungsaufgabe gesammelten Analysen und/oder Messungen verglichen werden, so dass eine wertvolle Bestätigung für eine erfolgreiche Wartungsaufgabe erhalten werden kann. Durch den Abschluss eines Arbeitsauftrags aus der Arbeitsauftragsliste durch eine durchgeführte Wartung kann der Zustand bzw. das Abbild 12 direkt nach Abschluss der Wartungsaufgabe als zukünftige neue Referenz für neue Abbilder 12 und Messungen herangezogen werden.

Die erfindungsgemäße Lösung bietet ein sehr zuverlässiges System 2 und Verfahren, welches ein Hintergrundsystem 6, welches eine Datenbank zur Abspeicherung und zum Zugriff umfasst, kontinuierlich mit Abbildern 12 und allenfalls zusätzlich Gerätetemperatur-, Gerätekontur- und Geräteverschiebungsdaten versorgt, sodass Verschleiß oder bevorstehende Probleme, die möglicherweise zu Ausfallzeiten führen können, frühzeitig erkannt werden können. Eine Zustandsüberwachung des Fördersystems 2 kann so unkompliziert und zuverlässig durchgeführt werden.

### Bezugszeichenliste

- 2: Fördersystem
- 4: Förderstrecke
- 6: Hintergrundsystem
- 8: Transportvorrichtung
- 8m: Mess-Transportvorrichtung
- 10: Kamera
- 12: Abbild
- t: Zeitstempel
- 16: Ortsstempel
- 18: Computer

## Patentansprüche

1. Verfahren zur Zustandsüberwachung beim Betreiben eines Fördersystems (2), das mindestens eine Förderstrecke (4) umfasst, wobei entlang der Förderstrecke (4) Transportvorrichtungen (8) transportierbar sind, **gekennzeichnet durch** die Verfahrensschritte
a) Aufnahme von Abbildern (12) des Fördersystems (2), insbesondere der Förderstrecke (4), aufgenommen von einer sich entlang der Förderstrecke (4) bewegenden Mess-Transportvorrichtung (8m) und Generieren eines Zeitstempels (t) und eines Ortsstempels für jedes Abbild (12);
b) das aufgenommene Abbild (12) wird zusammen mit einem Zeitstempel (t) und einem Ortsstempel (16) an ein Hintergrundsystem (6) übermittelt;
c) im Hintergrundsystem (6) werden die Abbilder (12) einer Analyse unterzogen, wobei Abbilder (12) mit gleichem Ortsstempel (16) miteinander verglichen werden und Abweichungen zwischen den Abbildern (12) mit gleichem Ortsstempel (16) als Zustandsveränderung des Fördersystems (2) erkannt und mit einer Meldung signalisiert werden.

2. Verfahren nach Anspruch 1, wobei
die Abbilder (12) aufgenommenen werden an definierten Positionen des Fördersystems (2), beispielsweise vorgeben durch ein Raster und/oder Orientierungspunkte der Förderstrecke (4), so dass im zeitlichen Verlauf zwei oder mehr Abbilder (12) mit identischem Ortsstempel (16) entstehen.

3. Verfahren nach einem der Ansprüche 1 bis 2, **dadurch gekennzeichnet, dass**
das Abbild (12) Wärmestrahlung und/oder optische Strahlung abbildet.

4. Verfahren nach einem der Ansprüche 1 bis 3, **dadurch gekennzeichnet, dass**
im Verfahrensschritt c) werden die Abbilder (12) mit gleichem Ortsstempel (16) analysiert hinsichtlich Abweichungen physikalischer Lage abgebildeter Teile und/oder Temperatur und/oder fehlender Teile.

5. Verfahren nach einem der Ansprüche 1 bis 4, **dadurch gekennzeichnet, dass**
die Mess-Transportvorrichtung (8m) mindestens eine Kamera (10) zur Aufnahme der Abbilder (12) umfasst, wobei die Kamera (10) auf einer Transportvorrichtung (8) angeordnet und befestigt ist und auf dieser entlang der Förderstrecke (4) transportiert wird.

6. Verfahren nach einem der Ansprüche 1 bis 5, wobei
die im Verfahrensschritt c) als Zustandsveränderung des Fördersystems (2) erkannten Abbilder (12) gemeinsam mit den erkannten Zustandsveränderung einem menschlichen Operator zur weiteren Entscheidung zugänglich gemacht werden.

7. Verfahren nach einem der Ansprüche 1 bis 6, **dadurch gekennzeichnet, dass**
die Transportvorrichtung (8) ausgestaltet ist als Destination Coded Vehicle (DCV) oder als fahrerloses Transportfahrzeug (FTF - Automated Guided Vehicle, AGV).

8. Fördersystem (2) umfassend mindestens eine Förderstrecke (4) zum Transport von Transportvorrichtungen (8), eine Mess-Transportvorrichtung (8) und ein Hintergrundsystem (6), wobei entlang der Förderstrecke (4) Transportvorrichtungen (8) transportierbar sind, wobei
a) die Mess-Transportvorrichtung (8m) ausgestaltet ist zur Aufnahme von Abbildern (12) des Fördersystems (2), insbesondere der Förderstrecke (4), und zum Generieren eines Zeitstempels (t) und eines Ortsstempels (16) für jedes Abbild (12) während einer Bewegung der Mess-Transportvorrichtung (8m) entlang der Förderstrecke (4);
b) die Mess-Transportvorrichtung (8m) ausgestaltet ist zur Übermittlung der aufgenommenen Abbilder (12) zusammen mit dem jeweiligen Zeitstempel (t) und dem jeweiligen Ortsstempel (16) an das Hintergrundsystem (6);
c) das Hintergrundsystem (6) ausgestaltet ist zum Analysieren der Abbilder (12) indem die Abbilder (12) mit gleichem Ortsstempel (16) miteinander verglichen werden und Abweichungen zwischen den Abbildern (12) mit gleichem Ortsstempel (16) als Zustandsveränderung des Fördersystems (2) erkannt und mit einer Meldung signalisiert werden.

9. Fördersystem (2) nach Anspruch 8, wobei
die Abbilder (12) aufgenommenen werden an definierten Positionen des Fördersystems (2), beispielsweise vorgeben durch ein Raster und/oder Orientierungspunkte der Förderstrecke (4), so dass im zeitlichen Verlauf zwei oder mehr Abbilder (12) mit identischem Ortsstempel (16) vorliegen.

10. Fördersystem (2) nach einem der Ansprüche 8 bis 9,
**dadurch gekennzeichnet, dass**
die Mess-Transportvorrichtung (8m) ausgestaltet ist zur Aufnahme von Abbildern (12) die Wärmestrahlung und/oder optische Strahlung abbilden.

11. Fördersystem (2) nach einem der Ansprüche 8 bis 10,
**dadurch gekennzeichnet, dass**
das Hintergrundsystem (6) ausgestaltet ist, die Abbilder (12) mit gleichem Ortsstempel (16) zu analysieren hinsichtlich Abweichungen physikalischer Lage abgebildeter Teile und/oder Temperatur und/oder fehlender Teile.

12. Fördersystem (2) nach einem der Ansprüche 8 bis 11,
**dadurch gekennzeichnet, dass**
die Mess-Transportvorrichtung (8m) mindestens eine Kamera (10) zur Aufnahme der Abbilder (12) umfasst, wobei die Kamera (10) auf einer Transportvorrichtung (8) angeordnet und befestigt ist und auf dieser entlang der Förderstrecke (4) transportierbar ist.

13. Fördersystem (2) nach einem der Ansprüche 8 bis 12,
**dadurch gekennzeichnet, dass**
die als Zustandsveränderung des Fördersystems (2) erkannten Abbilder (12) gemeinsam mit der erkannten Zustandsveränderung einem menschlichen Operator zur weiteren Entscheidung zugänglich gemacht werden.

14. Fördersystem (2) nach einem der Ansprüche 8 bis 13,
**dadurch gekennzeichnet, dass**
das Fördersystem (2) ein individuelles Fördersystem (2) (Individual Carrier System ICS), beispielsweise ein Flughafen-Gepäckfördersystem, ist.

15. Fördersystem (2) nach einem der Ansprüche 8 bis 14,
**dadurch gekennzeichnet, dass**
das Hintergrundsystem (6) auf der Mess-Transportvorrichtung (8m) angeordnet ist und entlang der Förderstrecke (4) transportierbar ist.
